# EUROPEAN PATENT APPLICATION

(11) **EP 3 142 006 A2**
(43) Date of publication of application: **15.03.2017**
(21) Application number: 16175463.5
(22) Date of filing: 21.06.2016
(51) Int. Cl.: G06F 9/44

(54) **DEVICE CONTROL METHOD AND APPARATUS**

(30) Priority: 09.09.2015 CN 201510570590
(71) Applicant: Xiaomi Inc., Beijing 100085 (CN)
(72) Inventor: WANG, Yuanbo, 100085 BEIJING (CN); CHEN, Hao, 100085 BEIJING (CN); HOU, Enxing, 100085 BEIJING (CN)
(74) Representative: Delumeau, François Guy

(57) **Abstract**

A device control method includes: receiving (S101) a control instruction specific to a current device to be controlled; acquiring (S102), in response to determination that a target plug-in for controlling the current device is not installed, the target plug-in from a server, the target plug-in including a control interface and a control logic; installing (S103) the target plug-in in response to determination that a plug-in for controlling part of additional controllable devices other than the current device has been installed; and controlling (S104) the current device to be controlled according to the control instruction and the installed target plug-in. According to the embodiments of the present disclosure, the target plug-in is saved on the server in advance and is not acquired from the server unless it is needed, and the target plug-in is installed when plug-ins corresponding to part of additional controllable devices other than the current device are installed locally.

## Description

### TECHNICAL FIELD

The present disclosure relates to the field of communications technologies, and more particularly, to a device control method and apparatus.

### BACKGROUND

With the rapid development of mobile terminal technologies, various mobile terminals such as mobile phones are widely used, and functions thereof are increasingly powerful. For example, a user may install multiple applications (APP) on a mobile phone to meet different demands.

"XiaomiTM Smarthome APP" is a mobile phone software used for integrating functions of smart devices (such as a Wi-Fi bulb, an air purifier, a smart power plug and so on), for example, functions of connecting, binding, device state check and control, shopping, etc. More and more types of smart devices connected to the APP may be bound to lead to a larger size of the APP, thereby causing the APP to occupy too much memory space of a mobile phone.

### SUMMARY

Accordingly, the present disclosure provides a device control method and apparatus, in accordance with claims which follow.

According to a first aspect of embodiments of the present disclosure, a device control method is provided, including:
receiving a control instruction specific to a current device to be controlled;
acquiring, in response to determination that a target plug-in for controlling the current device to be controlled is not installed, the target plug-in from a server, the target plug-in including a control interface and a control logic;
installing the target plug-in in response to determination that a plug-in for controlling part of additional controllable devices (other than the current device to be controlled) has been installed; and
controlling the current device to be controlled according to the control instruction and the installed target plug-in.

In an embodiment, the installing of the target plug-in includes:
overwrite-installing the target plug-in.

In an embodiment, the method may further include:
overwrite-installing the target plug-in in response to determination that plug-ins for controlling all of the additional controllable devices (other than the current device to be controlled) have been installed.

In an embodiment, the controllable devices include smart devices located within the same LAN.

In an embodiment, the acquiring of the target plug-in from a server includes:
sending a plug-in downloading request to the server, the plug-in downloading request carrying an identifier of the current device to be controlled, a model number of a current mobile terminal and a version number of a current APP; and
receiving the target plug-in returned by the server according to the plug-in downloading request.

In an embodiment, before the sending of a plug-in downloading request to the server, the method further includes:
sending a controllable device search request to the server; and
receiving a controllable device list that is returned by the server and contains the identifier of the current device to be controlled, and displaying the controllable device list, the identifier of the current device to be controlled being sent to the server by the current device to be controlled upon the current device to be controlled being connected with the current APP.

In an embodiment, the method may further include:
when it is learned that an update version of the target plug-in is present on the server, acquiring the update version of the target plug-in from the server, and installing the update version of the target plug-in.

In an embodiment, presence of the update version of the target plug-in on the server is learned by:
receiving a notification pushed by the server, the notification being used to indicate that the update version of the target plug-in is present on the server.

In an embodiment, presence of the update version of the target plug-in on the server is learned by:
sending a plug-in version search request to the server, the plug-in version search request carrying an identifier of the current device to be controlled; and
receiving a latest version number of the current device to be controlled returned by the server according to the plug-in version search request, and learning that the update version of the target plug-in is present on the server when the latest version number is greater than a current version number of the current device to be controlled.

In an embodiment, both the target plug-in of the current device to be controlled and the update version thereof are saved in a current mobile terminal; and
the update version of the target plug-in includes the identifier and the version number of the current device to be controlled, or the update version of the target plug-in includes identifiers and version numbers of the current device to be controlled and other devices to be controlled.

In an embodiment, the method may further include:
displaying the version number of the target plug-in and the version number of the update version thereof, and receiving a selected version number; and

invoking a corresponding plug-in according to the selected version number, and controlling the current device to be controlled according to the invoked plug-in.

In an embodiment, the method may further include:
acquiring a latest version plug-in of the current device to be controlled, and controlling the current device to be controlled according to the latest version plug-in.

According to a second aspect of the embodiments of the present disclosure, a device control apparatus is provided, including:
a receiving module configured to receive a control instruction specific to a current device to be controlled;
a determination acquiring module configured to acquire, in response to determination that a target plug-in for controlling the current device to be controlled is not installed, the target plug-in from a server, the target plug-in including a control interface and a control logic;
a first determination installing module configured to install the target plug-in acquired by the determination acquiring module in response to determination that a plug-in for controlling part of additional controllable devices other than the current device to be controlled has been installed; and
a control module configured to control the current device to be controlled according to the control instruction received by the receiving module and the target plug-in installed by the first determination installing module.

In an embodiment, the first determination installing module is configured to:
overwrite-install the target plug-in.

In an embodiment, the apparatus further includes:
a second determination installing module configured to overwrite-install the target plug-in acquired by the determination acquiring module in response to determination that plug-ins for controlling all of additional controllable devices other than the current device to be controlled have been installed.

In an embodiment, the controllable devices include smart devices located within the same LAN.

In an embodiment, the determination acquiring module includes:
a sending submodule configured to send a plug-in downloading request to the server, the plug-in downloading request carrying an identifier of the current device to be controlled, a model number of a current mobile terminal and a version number of a current APP; and
a receiving submodule configured to receive the target plug-in returned by the server according to the plug-in downloading request sent by the sending submodule.

In an embodiment, the apparatus further includes:
a sending module configured to send a controllable device search request to the server before the sending submodule sends the plug-in downloading request to the server; and
a receiving display module configured to receive a controllable device list that is returned by the server and contains the identifier of the current device to be controlled, and display the controllable device list, the identifier of the current device to be controlled being sent by the current device to be controlled, upon being connected with the current APP, to the server.

In an embodiment, the apparatus further includes:
an installation learning module configured to acquire, when it is learned that an update version of the target plug-in is present on the server, the update version of the target plug-in from the server, and install the update version of the target plug-in.

In an embodiment, the installation learning module includes:
a notification receiving submodule configured to receive a notification pushed by the server, the notification being used to indicate that the update version of the target plug-in is present on the server.

In an embodiment, the installation learning module includes:
a sending submodule configured to send a plug-in version search request to the server, the plug-in version search request carrying an identifier of the current device to be controlled; and
a receiving comparing submodule configured to receive a latest version number of the current device to be controlled returned by the server according to the plug-in version search request, and learn that the update version of the target plug-in is present on the server when the latest version number is greater than the current version number of the current device to be controlled.

In an embodiment, both the target plug-in of the current device to be controlled and the update version thereof are saved in a current mobile terminal; and
the update version of the target plug-in includes the identifier and the version number of the current device to be controlled, or the update version of the target plug-in includes identifiers and version numbers of both the current device and other devices to be controlled.

In an embodiment, the apparatus further includes:
a display receiving module configured to display the version number of the target plug-in and the version number of the update version thereof, and receive a selected version number; and
an invoking control module configured to invoke a corresponding plug-in according to the selected version number received by the display receiving module, and control the current device to be controlled according to the invoked plug-in.

In an embodiment, the apparatus further includes:
an acquiring control module configured to acquire a latest version plug-in of the current device to be controlled, and control the current device to be controlled according to the latest version plug-in.

According to a third aspect of the embodiments of the present disclosure, a device control apparatus is provided, including:
a processor; and
a memory configured to store instructions executable by the processor;
where the processor is configured, upon execution of the instructions, to:
   receive a control instruction specific to a current device to be controlled;
   acquire, in response to determination that a target plug-in for controlling the current device to be controlled is not installed, the target plug-in from a server, the target plug-in including a control interface and a control logic;
   install the target plug-in in response to determination that a plug-in for controlling part of additional controllable devices other than the current device to be controlled has been installed; and
   control the current device to be controlled according to the control instruction and the installed target plug-in.

According to a fourth aspect of the embodiment of the present disclosure, there is provided a computer program which, when being executed on a processor of a terminal device, performs any one of the above methods.

The technical solution provided by the embodiments of the present disclosure may achieve, at least in part, the following beneficial effects. The target plug-in is acquired from the server when it is determined that the target plug-in for controlling the current device to be controlled is not installed, and the target plug-in is installed when it is determined that a plug-in for controlling part of additional controllable devices other than the current device to be controlled has been installed, the current device to be controlled can be thus controlled according to the installed target plug-in. The target plug-in is saved on the server in advance and is not acquired from the server unless it is needed, and the target plug-in will be installed only when plug-ins for part of additional controllable devices other than the current device to be controlled are installed locally. Accordingly, even after the target plug-in is installed, there are installed locally only the plug-ins for a part of the controllable devices, such that space occupied by the APP can be greatly reduced.

The target plug-in may be overwrite-installed when it is determined that plug-ins for controlling all of the additional controllable devices other than the current device to be controlled have been installed. Accordingly, a plug-in for one of the controllable devices installed previously will be overwritten by the target plug-in for the current device to be controlled, thereby reducing space occupied by the APP.

The target plug-in of the current device to be controlled is acquired by sending the plug-in downloading request to the server, and the implementation manner is simple.

The target plug-in is overwrite-installed when it is determined that plug-ins for controlling part of additional controllable devices other than the current device to be controlled have been installed, thereby further reducing space occupied by the APP

When it is learned that an update version of the target plug-in is present on the server, the update version of the target plug-in is acquired and installed, and the current device to be controlled is then controlled according to the installed update version of the target plug-in. This partial update manner based on a plug-in may effectively reduce network traffic resources required to be consumed.

The selected version number is received, and a corresponding plug-in is invoked according to the selected version number to control the current device to be controlled, thereby allowing a user to select between a new version and an old version of the plug-in, and provides convenience for the user.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flowchart illustrating a device control method according to an example embodiment;
FIG. 2 is a flowchart illustrating another device control method according to an example embodiment;
FIG. 3 is a flowchart illustrating another device control method according to an example embodiment;
FIG. 4 is a schematic diagram illustrating an interface for downloading a target plug-in according to an example embodiment;
FIG. 5 is a flowchart illustrating another device control method according to an example embodiment;
FIG. 6 is a flowchart illustrating another device control method according to an example embodiment;
FIG. 7 is a schematic diagram illustrating a plug-in selecting interface according to an example embodiment;
FIG. 8 is a block diagram illustrating a device control apparatus according to an example embodiment;
FIG. 9A is a block diagram illustrating another device control apparatus according to an example embodiment;
FIG. 9B is a block diagram illustrating another device control apparatus according to an example embodiment;
FIG. 9C is a block diagram illustrating another device control apparatus according to an example embodiment;
FIG. 9D is a block diagram illustrating another device control apparatus according to an example embodiment;
FIG. 9E is a block diagram illustrating another device control apparatus according to an example embodiment;
FIG. 9F is a block diagram illustrating another device control apparatus according to an example embodiment;
FIG. 10 is a block diagram illustrating a further device control apparatus according to an example embodiment;
FIG. 11 is a block diagram illustrating a still further device control apparatus according to an example embodiment; and
FIG. 12 is a block diagram applicable to a device control apparatus according to an example embodiment.

### DETAILED DESCRIPTION

Reference will now be made in detail to certain embodiments, examples of which are illustrated in the accompanying drawings. The following description refers to the accompanying drawings in which the same numbers in different drawings represent the same or similar elements unless otherwise represented. The implementations set forth in the following description of certain embodiments do not represent all implementations consistent with the invention. Instead, they are merely examples of apparatuses and methods consistent with aspects related to the invention as recited in the appended claims.

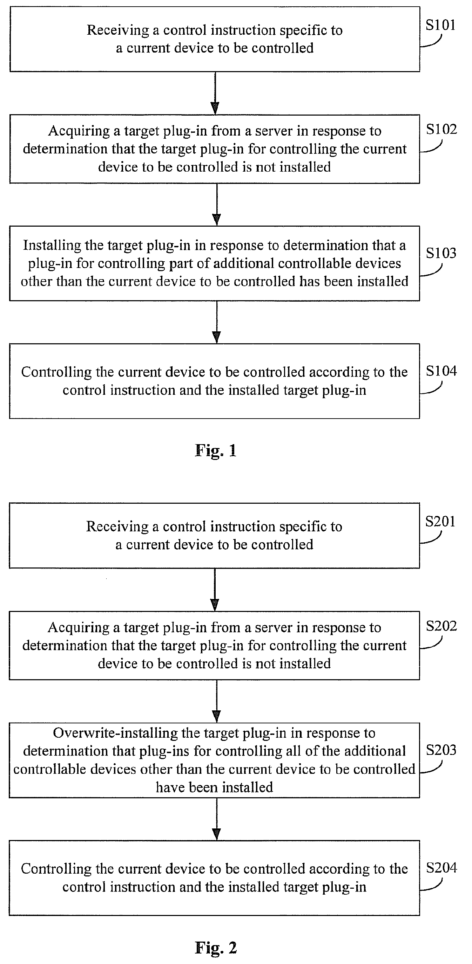

FIG. 1 is a flowchart illustrating a device control method according to an example embodiment. As shown in FIG. 1, the device control method may be applied to a mobile terminal provided with a preset APP, the mobile terminal may include a mobile phone, a tablet computer (PAD) or the like, and the method includes the following steps.

In Step S101, a control instruction specific to a current device to be controlled is received.

In this embodiment, when a user expects to control a certain smart device via a preset APP (such as XiaomiTM Smarthome APP) on a mobile terminal (such as a mobile phone), the user may click a displayed element relating to the smart device, and the preset APP may receive a control instruction specific to the current device to be controlled.

In Step S102, a target plug-in is acquired from a server in response to determination that the target plug-in for controlling the current device to be controlled is not installed, where the target plug-in includes a control interface and a control logic.

In this embodiment, in order to reduce space occupied by the preset APP, the preset APP only has basic functions of device connecting and binding and the like, and the control interface and the control logic for the controllable devices of the preset APP are packaged into a plug-in and stored in the server.

The control interface and the control logic for one controllable device may be packaged as one plug-in but this is not mandatory. Thus, for example, the control interfaces and the control logic for multiple controllable devices may also be packaged into one plug-in. For example, a company may develop three new products, and the control interfaces and the control logic for the three new products (namely, three devices) may be packaged into one plug-in.

The controllable devices of the preset APP may include smart devices located within a same LAN. For example, the controllable device may be one, or more than one, smart device connected by the user to the APP within a current LAN using an account number of the user.

In this embodiment, after receiving the control instruction specific to the current device to be controlled, the preset APP determines whether the target plug-in for controlling the current device to be controlled is installed on the current mobile terminal such as a mobile phone, and acquires the target plug-in from the server if the target plug-in is not installed yet.

In Step S103, the target plug-in is installed in response to determination that a plug-in for controlling part of additional controllable devices other than the current device to be controlled has been installed.

In this embodiment, after the target plug-in is acquired, the target plug-in is installed when the plug-ins corresponding to part of the additional controllable devices other than the current device to be controlled have been installed in the APP.

In an embodiment, the current device to be controlled is also a controllable device.

Supposing the controllable devices of the APP include device 1 to device 100, and the current device to be controlled is the device 1 and plug-ins for device 2 to device 50 have been installed in the APP, the target plug-in of the device 1 can be thus installed because the plug-ins of part of the additional controllable devices other than the current device to be controlled have been installed in the APP.

In Step S104, the current device to be controlled is controlled according to the control instruction and the installed target plug-in.

In this embodiment, after the target plug-in for the current device to be controlled is installed, the current device to be controlled may be controlled according to the control instruction and the installed target plug-in.

In the foregoing embodiments of the device control method, the target plug-in is acquired from the server when it is determined that the target plug-in for controlling the current device to be controlled is not installed, and the target plug-in is installed when it is determined that a plug-in for controlling part of additional controllable devices other than the current device to be controlled has been installed, thus the current device to be controlled may be controlled according to the installed target plug-in. The target plug-in was saved on the server previously and is not acquired from the server unless it is needed, and the target plug-in is installed when the plug-ins for part of additional controllable devices other than the current device to be controlled are installed locally, i.e., after the target plug-in is installed, merely the plug-ins for only part of additional controllable devices are installed locally. Therefore, space occupied by the APP is greatly reduced.

FIG. 2 is a flowchart illustrating another device control method according to an example embodiment. As shown in FIG. 2, the method includes the following steps.

Steps S201-S202 are the same as Steps S101-S102, and thus are not described herein.

In Step S203, the target plug-in is overwrite-installed in response to determination that plug-ins for controlling all of the additional controllable devices other than the current device to be controlled have been installed.

In this embodiment, the plug-ins for all of the additional controllable devices other than the current device to be controlled have been installed on the APP. Accordingly, in order to save memory space, after the target plug-in is acquired, the target plug-in is overwrite-installed in the APP.

Overwrite-installation means that a plug-in for one controllable device installed previously is overwritten by the target plug-in for the current device to be controlled, namely, no plug-in is additionally installed, thereby reducing occupied space.

Supposing the controllable devices of the APP include device 1 to device 100, the current device to be controlled is the device 1 and plug-ins for device 2 to device 100 have been installed in the APP. Since the plug-ins for all of additional controllable devices other than the current device to be controlled have been installed on the APP, in order to save memory space, the target plug-in for the device 1 is overwrite-installed, for example, a plug-in for the device 2 is overwritten by the target plug-in for the device 1.

It is to be noted that, in this embodiment the device 2 is taken as the overwritten device, but in practical application, the overwritten device may be selected according to different strategies. For example, the overwritten device may be randomly selected or selected in sequence and so on.

Step S204 is the same as Step S104, and thus is not described herein.

In the foregoing embodiment of the device control method, the target plug-in is overwrite-installed when it is determined that plug-ins for controlling all of additional controllable devices other the current device to be controlled have been installed. In other words, a plug-in for a controllable device installed previously will be overwritten by the target plug-in for the current device to be controlled, thereby reducing space occupied by the APP.

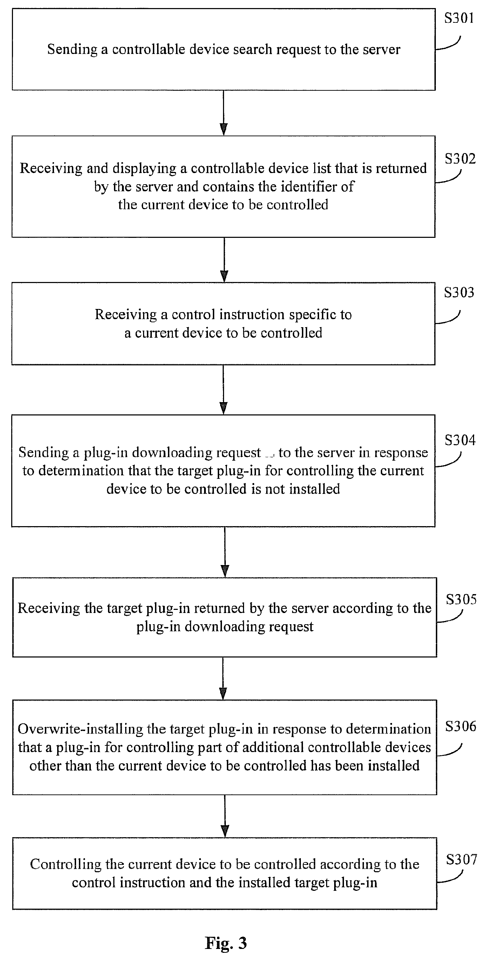

FIG. 3 is a flowchart illustrating another device control method shown according to an example embodiment. As shown in FIG. 3, the method includes the following steps.

In Step S301, a controllable device search request is sent to the server.

In this embodiment, the user may connect a device to the APP by using the account number (such as a XiaomiTM account number) of the user, where a binding relationship may be established between the device connected to the APP and the account number of the user. The device connected to the APP is a controllable device of the APP. An identifier of the device may be sent to the server when the device is connected to the APP so that the server can save a correspondence relation between the account number and the device identifier.

In an embodiment, the device identifier includes a character string used to differentiate different types of devices.

When the user clicks a preset option such as "My Device" in the APP, the APP may send a controllable device search request to the server.

In Step S302, a controllable device list that is returned by the server and contains the identifier of the current device to be controlled is received and displayed.

After the controllable device search request is received, the server may acquire, according to identification information (such as a mobile phone number) of the current mobile terminal which is carried in the controllable device search request, an account number (such as a XiaomiTM account number) bound with the mobile phone number, then obtains the controllable device list containing these device identifiers according to the correspondence relation between the XiaomiTM account number, prestored account numbers and these device identifiers, and returns the controllable device list to the APP After the APP receives the controllable device list, the controllable device list is displayed.

In Step S303, a control instruction specific to a current device to be controlled is received.

In this embodiment, when the user expects to control a certain device in the controllable device list, the user may click the device, which is the current device to be controlled, in the displayed controllable device list.

In Step S304, a plug-in downloading request is sent to the server in response to determination that the target plug-in for controlling the current device to be controlled is not installed.

The plug-in downloading request carries therein an identifier of the current device to be controlled, a model number of the current mobile terminal and a version number of the current APP

In this embodiment, the plug-in downloading request is sent to the server when the target plug-in for controlling the current device to be controlled is not installed in the current APP.

In Step S305, the target plug-in returned by the server according to the plug-in downloading request is received.

After receiving the plug-in downloading request, the server may obtain, according to the identifier of the current device to be controlled, the model number of the current mobile terminal, such as a mobile phone model number, and the version number of the current APP that are carried in the plug-in downloading request, the target plug-in for the current device to be controlled, and return the target plug-in to the APP.

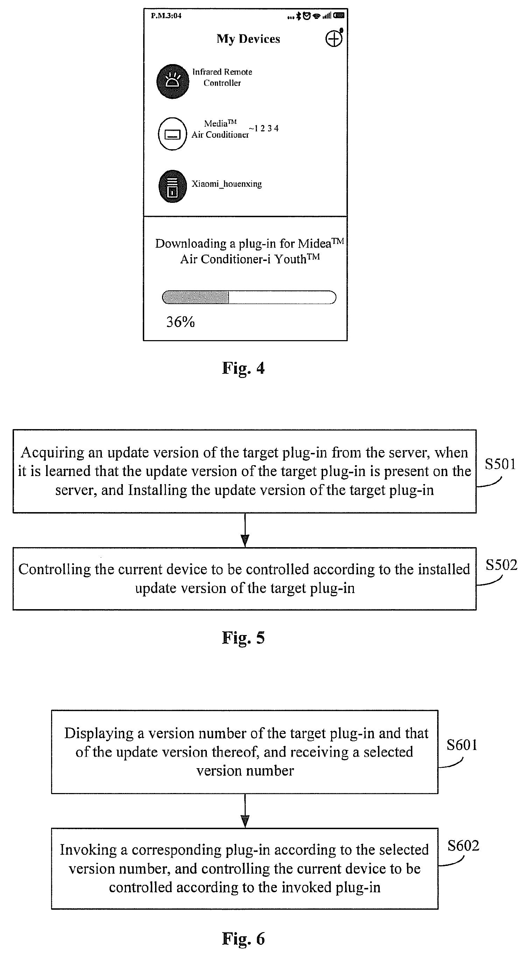

An interface for acquiring the target plug-in (namely, downloading the target plug-in) in the APP may be as shown in FIG. 4. In FIG. 4, the target plug-in for an air conditioner is downloaded, and from FIG. 4 it can be seen that the download progress is 36%.

In Step S306, the target plug-in is overwrite-installed in response to determination that a plug-in for controlling part of additional controllable devices other than the current device to be controlled has been installed.

After the target plug-in is acquired, the target plug-in is installed when the plug-ins for part of the additional controllable devices other than the current device to be controlled have been installed in the APP.

In order to further reduce space occupied by the APP, in this embodiment, the target plug-in is overwrite-installed.

Supposing the controllable devices of the APP include device 1 to device 100, the current device to be controlled is the device 1 and plug-ins for device 2 to device 60 have been installed in the APP. Accordingly, in order to further reduce space occupied by the APP, the target plug-in for the device 1 is overwrite-installed. For example, a plug-in of device 10 may be overwritten by the target plug-in for the device 1.

In Step S307, the current device to be controlled is controlled according to the control instruction and the installed target plug-in.

In this embodiment, after the target plug-in for the current device to be controlled is overwrite-installed, the current device to be controlled may be controlled according to the control instruction and the installed target plug-in.

In the foregoing embodiment of the device control method, the target plug-in for the current device to be controlled is acquired by sending the plug-in downloading request to the server, which is simple to be implemented, and the target plug-in is overwrite-installed when it is determined that plug-ins for controlling part of the additional controllable devices other than the current device to be controlled have been installed, thereby further reducing space occupied by the APP.

FIG. 5 is a flowchart illustrating another device control method according to an exemplary embodiment. As shown in FIG. 5, after the foregoing Step S103, the method may further include the following steps.

In Step S501, when it is learned that an update version of the target plug-in is present on the server, the update version of the target plug-in is acquired from the server, and the update version of the target plug-in is installed.

It may be learned that the update version of the target plug-in is present on the server through multiple manners, for example, there following two manners.

In the first manner, a notification pushed by the server is received, where the notification is used to indicate that the update version of the target plug-in is present on the server.

In the second manner, a plug-in version search request is sent to the server, where the plug-in version search request carries therein an identifier of the current device to be controlled; a latest version number, corresponding to the current device to be controlled, returned by the server according to the plug-in version search request is then received, and it can be learned that the update version of the target plug-in is present on the server when the latest version number is greater than a current version number corresponding to the current device to be controlled.

In this embodiment, after the update version of the target plug-in is acquired and installed, both the target plug-in for the current device to be controlled and the update version thereof are saved in the current mobile terminal. In other words, different versions of plug-ins for the same device are saved in the current mobile terminal such as a mobile phone.

In addition, the update version of the target plug-in may merely contain a control interface and a control logic updated for the current device to be controlled, or may contain control interfaces and control logic for other devices to be controlled or controllable devices.

For example, Company A has a new device d to be released, and a control interface and a control logic of a device b need to be updated at the same time. A developer may thus select to package the control interfaces and the control logic of both the device d and the device b into one new plug-in such as a plug-in 2. In addition, the developer may also select to separately package the control interfaces and the control logic of the device d and the device b into two new plug-ins.

Accordingly, the update version of the target plug-in for the device b is the plug-in 2, the plug-in 2 is thus acquired from the server.

In Step S502, the current device to be controlled is controlled according to the installed update version of the target plug-in.

In this embodiment, after the update version of the target plug-in is installed, the current device to be controlled may be controlled according to the installed update version of the target plug-in.

In the foregoing embodiment of the device control method, when it is learned that an update version of the target plug-in is present on the server, the update version of the target plug-in is acquired and installed, and the current device to be controlled is then controlled according to the installed update version of the target plug-in. This partial update manner based on plug-ins may effectively reduce network traffic resources required to be consumed.

FIG. 6 is a flowchart illustrating another device control method according to an exemplary embodiment. As shown in FIG. 6, after the foregoing Step S501, the method may further include the following steps.

In Step S601, a version number of the target plug-in and that of the update version thereof are displayed, and a selected version number is received (e.g. the APP may receive a user selection of a version number).

In this embodiment, different versions of plug-ins for a same device may be simultaneously saved in the current mobile terminal. Therefore, the version numbers of both the target plug-in and the update version thereof may be displayed.

In addition, the update version of the target plug-in may merely contain a control interface and a control logic updated for the current device to be controlled, or may contain control interfaces and control logic for other devices to be controlled or other controllable devices.

For example, Company A has a new device d to be released, and a control interface and a control logic for a device b need to be updated at the same time. A developer may select to package the control interfaces and the control logic of both the device d and the device b into one new plug-in such as a plug-in 2. In addition, the developer may also select to separately package the control interfaces and the control logic for the device d and the device b into two new plug-ins.

Each plug-in contains therein an identifier of and a version number corresponding to the device. Therefore, after the version numbers of the target plug-in and the update version thereof are displayed at the APP, a version number of the plug-in can be selected according to the identifier of and the version number corresponding to the device contained in different versions of plug-ins.

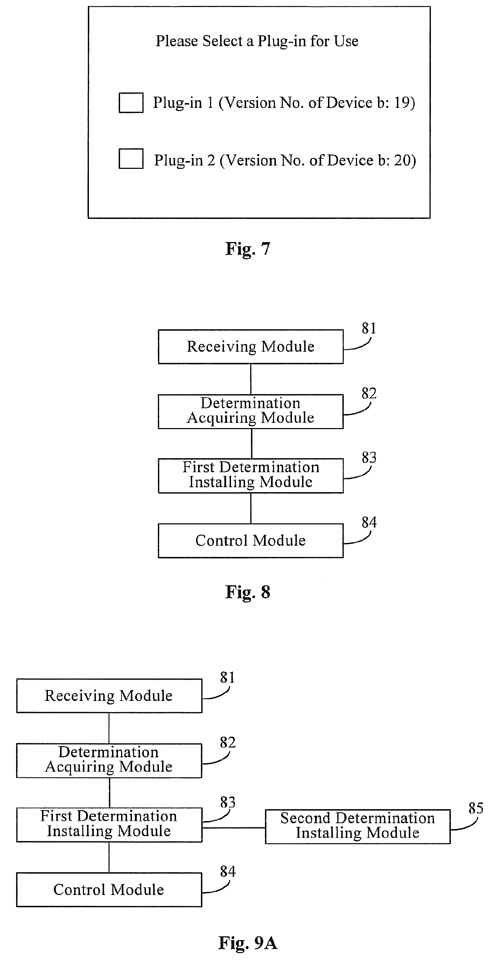

Supposing a version number corresponding to the device b in the target plug-in, for example, plug-in 1, is 19, and a version number corresponding to the device b in the update version of the target plug-in (namely plug-in 2) is 20, as shown in FIG. 7. If the user feels that the version of plug-in 2 is not stable enough and thus expects to use plug-in 1, the user may select the plug-in (namely the plug-in 1) whose version number is 1.

In Step S602, a corresponding plug-in is invoked according to the selected version number, and the current device to be controlled is controlled according to the invoked plug-in.

Supposing the user selects plug-in 1, plug-in 1 may be then invoked to control the device b.

In the foregoing Steps S601-S602, the current device to be controlled is controlled via the plug-in selected by the user. In this embodiment, the current device to be controlled may also be controlled through other manners. For example, a plug-in having a latest version number may be used by default to control the current device to be controlled.

In an embodiment, the plug-in having the latest version number can be used by default to control the current device to be controlled based on: acquiring the latest version plug-in corresponding to the current device to be controlled, and controlling the current device to be controlled according to the latest version plug-in.

For example, supposing the version number of device a in the target plug-in, for example, plug-in 3, is 19, the version number of device a in the update version of the target plug-in (namely plug-in 4) is 21, the plug-in 4 can be thus used to control device a.

In the foregoing embodiment of the device control method, the selected version number is received, and a corresponding plug-in is invoked according to the selected version number to control the current device to be controlled, thereby allowing the user to select between a new version and an old version of the plug-in, and providing convenience for the user.

Corresponding to the embodiments of the foregoing device control method, the present disclosure also provides embodiments of the device control apparatus.

FIG. 8 is a block diagram illustrating a device control apparatus according to an example embodiment. As shown in FIG. 8, the device control apparatus includes: a receiving module 81, a determination acquiring module 82, a first determination installing module 83 and a control module 84.

The receiving module 81 is configured to receive a control instruction specific to a current device to be controlled.

The determination acquiring module 82 is configured to acquire a target plug-in from the server in response to determination that the target plug-in for controlling the current device to be controlled is not installed, and the target plug-in includes a control interface and a control logic.

The first determination installing module 83 is configured to install the target plug-in acquired by the determination acquiring module 82 in response to determination that a plug-in for controlling part of additional controllable devices other than the current device to be controlled has been installed.

The control module 84 is configured to control the current device to be controlled according to the control instruction received by the receiving module 81 and the target plug-in installed by the first determination installing module 83.

In this example, the controllable devices refer to smart devices located within the same LAN.

The apparatus as shown in FIG. 8 is configured to implement the method as shown in FIG. 1, with the same description of related content, and thus is not repeated herein.

In the embodiment of the foregoing device control apparatus, the target plug-in is acquired from the server when the determination acquiring module determines that the target plug-in for controlling the current device to be controlled is not installed, and the target plug-in is installed when the first determination installing module determines that a plug-in for controlling part of additional controllable devices other than the current device to be controlled has been installed, thus the current device to be controlled can be controlled according to the installed target plug-in. The target plug-in was saved on the server in advance and is not acquired from the server unless it is needed, and the target plug-in is installed when a plug-in for part of additional controllable devices other than the current device to be controlled is installed locally. In other words, after the target plug-in is installed, there still are plug-ins for part of controllable devices installed locally. Therefore, space occupied by the APP is greatly reduced.

FIG. 9A is a block diagram illustrating another device control apparatus according to an example embodiment. As shown in FIG. 9A, on the basis of the embodiment as shown in FIG. 8, the apparatus may further include: a second determination installing module 85.

The second determination installing module 85 is configured to overwrite-install the target plug-in acquired by the determination acquiring module 82 in response to determination that a plug-in for controlling all of the additional controllable devices other than the current device to be controlled has been installed.

The apparatus as shown in FIG. 9A is configured to implement the method as shown in FIG. 2, with the same description on related content, and thus is not repeated herein.

In the foregoing embodiment of the device control apparatus, the target plug-in is overwrite-installed when the second determination installing module determines that plug-ins for controlling all of the additional controllable devices other than the current device to be controlled have been installed. In other words, a plug-in for a controllable device installed previously will be overwritten by the target plug-in for the current device to be controlled, thereby reducing space occupied by the APP.

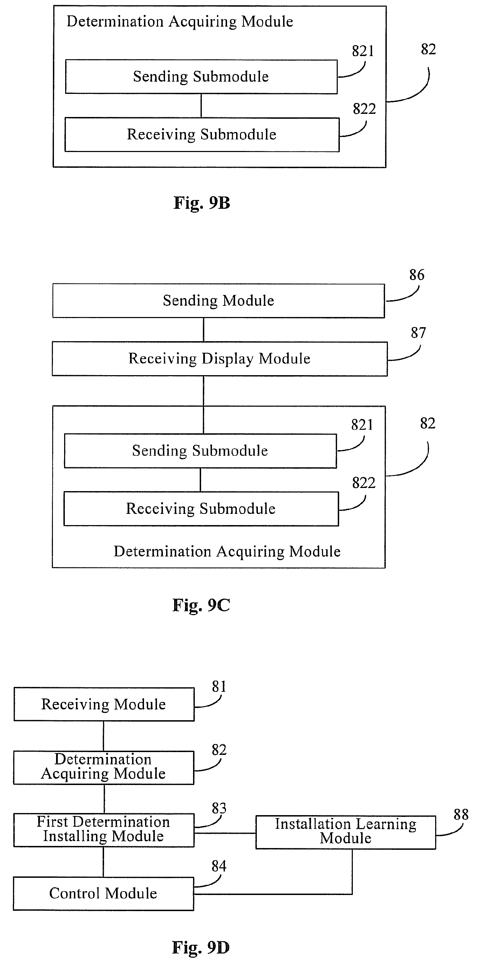

FIG. 9B is a block diagram illustrating another device control apparatus according to an exemplary embodiment. As shown in FIG. 9B, on the basis of the embodiment as shown in FIG. 8, the determination acquiring module 82 may include: a sending submodule 821 and a receiving submodule 822.

The sending submodule 821 is configured to send a plug-in downloading request to the server, where the plug-in downloading request carries therein an identifier of the current device to be controlled, a model number of the current mobile terminal and a version number of a current APP.

The receiving submodule 822 is configured to receive the target plug-in returned by the server according to the plug-in downloading request sent by the sending submodule 821.

The apparatus as shown in FIG. 9B is configured to implement the method as shown in FIG. 3, with the same description on related content, and thus is not repeated herein.

In the foregoing embodiment of the device control apparatus, the target plug-in for the current device to be controlled is acquired by sending the plug-in downloading request to the server, and is thus simple for implementation.

FIG. 9C is a block diagram illustrating another device control apparatus according to an example embodiment. As shown in FIG. 9C, on the basis of the embodiment as shown in FIG. 9B, the apparatus may further include: a sending module 86 and a receiving display module 87.

The sending module 86 is configured to send a controllable device search request to the server before the sending submodule 821 sends the plug-in downloading request to the server.

The receiving display module 87 is configured to receive a controllable device list that is returned by the server and contains an identifier of the current device to be controlled, and display the controllable device list, where the identifier of the current device to be controlled is sent by the current device to be controlled, upon being connected with the current APP, to the server.

The apparatus as shown in FIG. 9C is configured to implement the method as shown in FIG. 3, with the same description on related content, and thus is not repeated herein.

In the foregoing embodiment of the device control apparatus, the controllable device list is obtained by sending the controllable device search request to the server, and is thus simple to be implemented.

FIG. 9D is a block diagram illustrating another device control apparatus according to an example embodiment. As shown in FIG. 9D, on the basis of the embodiment as shown in FIG. 8, the apparatus may further include an installation learning module 88.

The installation learning module 88 is configured to acquire, if it is learned that an update version of the target plug-in is present on the server, the update version of the target plug-in from the server, and install the update version of the target plug-in.

The apparatus as shown in FIG. 9D is configured to implement the method as shown in FIG. 5, with the same description on related content, and thus is not repeated herein.

In the foregoing embodiment of the device control apparatus, when it is learned that an update version of the target plug-in is present on the server, the update version of the target plug-in is acquired and installed, and the current device to be controlled is then controlled according to the installed update version of the target plug-in. This partial update manner based on plug-ins may effectively reduce network traffic resources required to be consumed.

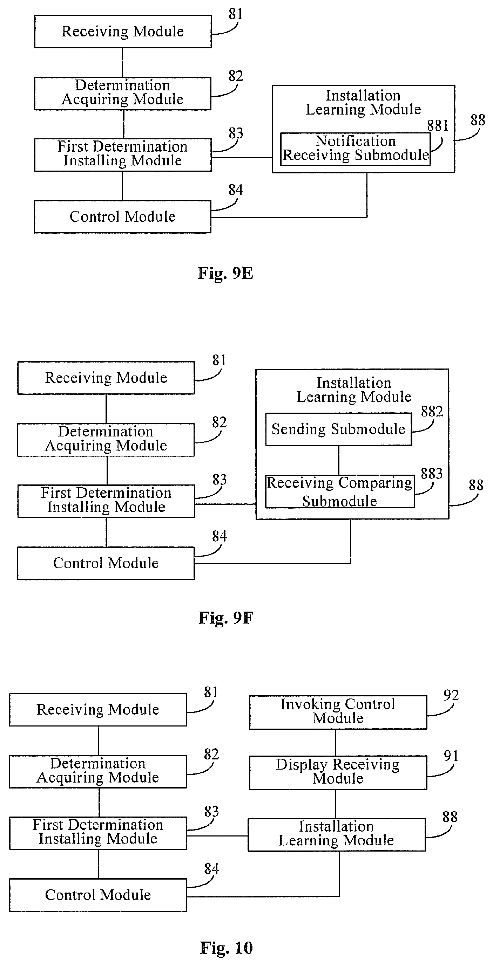

FIG. 9E is a block diagram illustrating another device control apparatus according to an example embodiment. As shown in FIG. 9E, on the basis of the embodiment as shown in FIG. 9D, the installation learning module 88 may include a notification receiving submodule 881.

The notification receiving submodule 881 is configured to receive a notification pushed by the server, where the notification is used to indicate that the update version of the target plug-in is present on the server.

The apparatus as shown in FIG. 9E is configured to implement the method as shown in FIG. 5, with the same description on related content, and thus is not repeated herein.

In the foregoing embodiment of the device control apparatus, it is learned that the update version of the target plug-in is present on the server by receiving a notification, a simple way of learning is thus achieved.

FIG. 9F is a block diagram illustrating another device control apparatus according to an example embodiment. As shown in FIG. 9F, on the basis of the embodiment as shown in FIG. 9D, the installation learning module 88 may include: a sending submodule 882 and a receiving comparing submodule 883.

The sending submodule 882 is configured to send a plug-in version search request to the server, where the plug-in version search request carries an identifier of the current device to be controlled.

The receiving comparing submodule 883 is configured to receive a latest version number corresponding to the current device to be controlled returned by the server according to the plug-in version search request, and learn that the update version of the target plug-in is present on the server when the latest version number is greater than a current version number corresponding to the current device to be controlled.

The apparatus as shown in FIG. 9F is configured to implement the method as shown in FIG. 5, with the same description on related content, and thus is not repeated herein.

In the foregoing embodiment of the device control apparatus, it is learned that the update version of the target plug-in is present on the server by sending a plug-in version search request, thus another simple way of learning can be achieved.

FIG. 10 is a block diagram illustrating a further device control apparatus according to an example embodiment. As shown in FIG. 10, on the basis of the embodiment as shown in FIG. 9D, the apparatus may further include: a display receiving module 91 and an invoking control module 92.

The display receiving module 91 is configured to display a version number of the target plug-in and that of the update version thereof, and receive a selected version number.

The invoking control module 92 is configured to invoke a corresponding plug-in according to the selected version number received by the display receiving module 91, and control the current device to be controlled according to the invoked plug-in.

In an embodiment, both the target plug-in for the current device to be controlled and the update version thereof are saved in the current mobile terminal. The update version of the target plug-in includes therein an identifier and a version number corresponding to the current device to be controlled, or the update version of the target plug-in includes identifiers and version numbers corresponding to the current device to be controlled and other devices to be controlled.

The apparatus as shown in FIG. 10 is configured to implement the method as shown in FIG. 6, with the same description on related content, and thus is not repeated herein.

In the foregoing embodiment of the device control apparatus, the selected version number is received, and the corresponding plug-in is invoked according to the selected version number to control the current device to be controlled. Accordingly, a user is enabled to select between a new version and an old version of the plug-in, thereby providing convenience for the user.

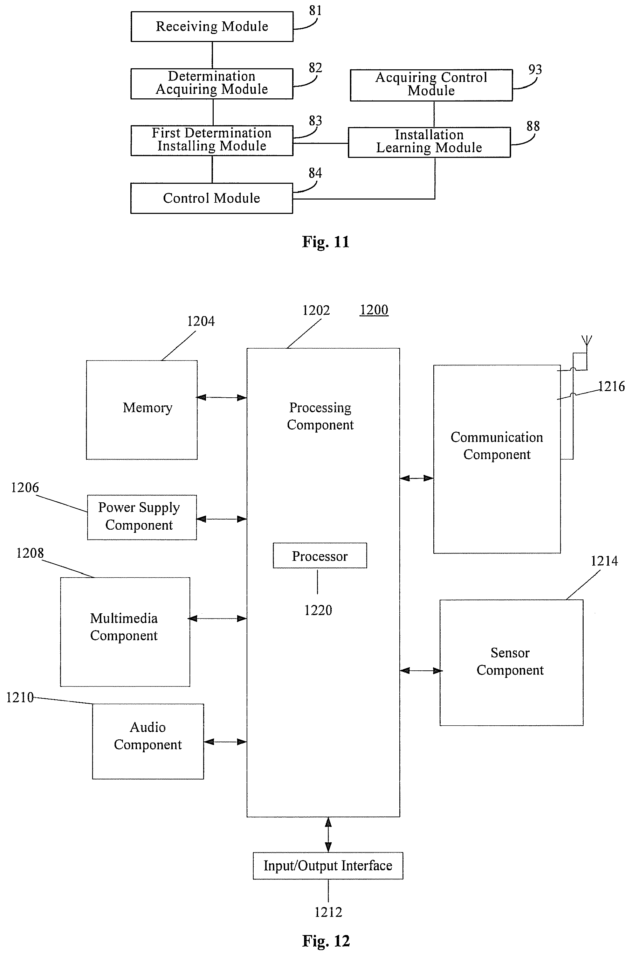

FIG. 11 is a block diagram illustrating a still further device control apparatus according to an exemplary embodiment. As shown in FIG. 11, on the basis of the embodiment as shown in FIG. 9D, the apparatus may further include an acquiring control module 93.

The acquiring control module 93 is configured to acquire a latest version plug-in for the current device to be controlled, and control the current device to be controlled according to the latest version plug-in.

In an embodiment, both the target plug-in for the current device to be controlled and the update version thereof are saved in the current mobile terminal. The update version of the target plug-in includes therein an identifier and a version number of the current device to be controlled, or the update version of the target plug-in includes therein identifiers and version numbers of the current device to be controlled as well as other device to be controlled.

The apparatus as shown in FIG. 11 is configured to implement the method as shown in FIG. 6, with the same description on related content, and thus is not repeated herein.

In the foregoing embodiment of the device control apparatus, the latest version plug-in is used by default to control the current device to be controlled, so it is easy for implementation.

With regard to the apparatus in the foregoing embodiments, detailed description of specific modes for conducting operation of modules and submodules has been made in the embodiments related to the method, no detailed illustration will be made herein.

FIG. 12 is a block diagram applicable to a device control apparatus according to an exemplary embodiment. For example, the apparatus 1200 may be a mobile telephone, a computer, a digital broadcasting terminal, a message sending and receiving device, a game control center, a tablet device, a medical device, a fitness device, a personal digital assistant, an aircraft and so on.

Referring to FIG. 12, the apparatus 1200 may include one or more components as below: a processing component 1202, a memory 1204, a power supply component 1206, a multimedia component 1208, an audio component 1210, an input/output (I/O) interface 1212, a sensor component 1214 and a communication component 1216.

The processing component 1202 usually controls the overall operation of the apparatus 1200 such as operations relating to display, making calls, data communication, taking photos and recording. The processing component 1202 may include one or more processors 1220 to execute instructions to implement all or part of the steps of the above method. Besides, the processing component 1202 may include one or more modules for facilitating the interaction between the processing component 1202 and other components. For example, the processing component 1202 may include a multimedia module to facilitate the interaction between the multimedia component 1208 and the processing component 1202.

The memory 1204 is configured to store various types of data to support the operation at the apparatus 1200. Examples of the data include any instructions for performing applications or methods at the apparatus 1200, contact data, phone book data, a message, a picture and a video and so on. The memory 1204 may be any types of volatile or non-volatile storage devices or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or compact disk.

The power supply component 1206 provides power for components of the apparatus 1200. The power supply component 1206 may include a power management system, one or more power supplies, and other related components for generating, managing and distributing power for the apparatus 1200.

The multimedia component 1208 includes a screen which provides an output interface between the apparatus 1200 and the user. In some embodiments, the screen may include a liquid crystal display (LCD) and a touch panel (TP). If the screen includes a touch panel, the screen may be realized to be a touch screen to receive an input signal from the user. The touch panel includes one or more touch sensors to sense touch, slide and gestures on the touch panel. The touch sensor may not only sense the touch or slide boundary, but also detect the duration time and pressure of the touch or slide operation. In some embodiments, the multimedia component 1208 includes a front-facing camera and/or a rear-facing camera. When the apparatus 1200 is in an operation mode, such as a photo mode or video mode, the front-facing camera and/or the rear-facing camera may receive external multimedia data. Each front-facing camera and rear-facing camera may be a fixed optical lens system or have the focal length and optical zoom ability.

The audio component 1210 is configured to output and/or input an audio signal. For example, the audio component 1210 includes a microphone (MIC); when the apparatus 1200 is in an operation mode such as a call mode, a record mode and a speech recognition mode, the microphone is configured to receive an external audio signal. The received audio signal may be further stored in the memory 1204 or sent out by the communication component 1216. In some embodiments, the audio component 1210 may further include a loudspeaker for outputting the audio signal.

The I/O interface 1212 may provide interface between the processing component 1202 and a peripheral interface module. The peripheral interface module may be a keyboard, a click wheel, a button and so on. These buttons include but are not limited to: a homepage button, a volume button, a start button and a lock button.

The sensor component 1214 includes one or more sensors for evaluating states of different aspects of the apparatus 1200. For example, the sensor component 1214 may detect the on/off state of the apparatus 1200, relative locations of components, for example, the components are the display and keypads of the apparatus 1200. The sensor component 1214 may further sense the position change of a component of the apparatus 1200 or the position change of the apparatus 1200, whether the touch exists between the user and the apparatus 1200, the direction or acceleration/deceleration of the apparatus 1200, and temperature change of the apparatus 1200. The sensor component 1214 may include a proximity sensor which is configured to sense the existence of a nearby object when no physical contact exists. The sensor component 1214 may further include a light sensor such as a CMOS or CCD image sensor, for using in imaging applications. In some embodiments, the sensor component 1214 may further include an acceleration sensor, a gyro sensor, a magnetic sensor, a pressure sensor, or a temperature sensor.

The communication component 1216 is configured to facilitate communicating between the apparatus 1200 and other devices in wired or wireless manner. The apparatus 1200 may be connected to wireless network based on communication standard such as wireless fidelity (Wi-Fi), 2G or 3G or their combinations. In an example embodiment, the communication component 1216 receives, by means of a broadcast channel, a broadcast signal or broadcast-related information from an external broadcast management system. In an example embodiment, the communication component 1216 further includes a near field communication (NFC) module to promote short-range communication. For example, the NFC module may be achieved based on radio frequency identification (RFID) technology, infrared data association (IrDA) technology, ultra-wide bandwidth (UWB) technology, Bluetooth (BT) technology and other technologies.

In example embodiments, the apparatus 1200 may be achieved by one or more of application specific integrated circuit (ASIC), digital signal processor (DSP), digital signal processing device (DSPD), programmable logic device (PLD), field programmable gate array (FPGA), controller, microcontroller, microprocessor or other electronic components for executing the method above.

In example embodiments, a non-transitory computer-readable storage medium including an instruction is also provided, for example, the memory 1204 including the instruction. The instruction may be executed by the processor 1220 of the apparatus 1200 to achieve the above method. For example, the non-transitory computer-readable storage medium may be a ROM, a random access memory (RAM), a CD-ROM, a magnetic tape, a floppy disk and optical data storage device, etc.

## Claims

1. A device control method, comprising:
receiving (S101, S201, S303) a control instruction specific to a current device to be controlled;
acquiring (S102, S202), in response to determination that a target plug-in for controlling the current device is not installed, the target plug-in from a server, the target plug-in comprising a control interface and a control logic;
installing (S103) the target plug-in in response to determination that a plug-in for controlling part of additional controllable devices other than the current device has been installed; and
controlling (S104, S204, S307) the current device according to the control instruction and the installed target plug-in.

2. The device control method of claim 1, further comprising:
overwrite-installing (S203) the target plug-in in response to determination that a plug-in for controlling whole of the additional controllable devices other than the current device has been installed.

3. The device control method of claim 1, wherein the acquiring the target plug-in from a server comprises:
sending (S304) a plug-in downloading request to the server, the plug-in downloading request carrying an identifier of the current device, a model number of a current mobile terminal and a version number of a current APP; and
receiving (S305) the target plug-in returned by the server according to the plug-in downloading request.

4. The device control method of claim 1, further comprising:
when learning that an update version of the target plug-in is present on the server, acquiring (S501) the update version of the target plug-in from the server, and installing the update version of the target plug-in.

5. The device control method of claim 4, wherein the learning that an update version of the target plug-in is present on the server comprises:
receiving a notification pushed by the server, the notification indicating that the update version of the target plug-in is present on the server.

6. The device control method of claim 4, wherein the learning that an update version of the target plug-in is present on the server comprises:
sending a plug-in version search request to the server, the plug-in version search request carrying an identifier of the current device; and
receiving a latest version number corresponding to the current device returned by the server according to the plug-in version search request, and learning that the update version of the target plug-in is present on the server when the latest version number is greater than a current version number corresponding to the current device.

7. The device control method of claim 4, wherein both the target plug-in of the current device and the update version of the target plug-in are saved in a current mobile terminal; and
the update version of the target plug-in comprises the identifier and the version number of the current device, or the update version of the target plug-in comprises identifiers and version numbers of the current device and other devices to be controlled.

8. A device control apparatus, comprising:
a receiving module (81) configured to receive a control instruction specific to a current device to be controlled;
a determination acquiring module (82) configured to acquire, in response to determination that a target plug-in for controlling the current device is not installed, the target plug-in from a server, the target plug-in comprising a control interface and a control logic;
a first determination installing module (83) configured to install the target plug-in acquired by the determination acquiring module in response to determination that a plug-in for controlling part of additional controllable devices other than the current device has been installed; and
a control module (84) configured to control the current device according to the control instruction received by the receiving module and the target plug-in installed by the first determination installing module.

9. The device control apparatus of claim 8, further comprising:
a second determination installing module (85) configured to overwrite-install the target plug-in acquired by the determination acquiring module in response to determination that a plug-in for controlling whole of the additional controllable devices other than the current device has been installed.

10. The device control apparatus of claim 8, wherein the determination acquiring module comprises:
a sending submodule (821) configured to send a plug-in downloading request to the server, the plug-in downloading request carrying an identifier of the current device, a model number of a current mobile terminal and a version number of a current APP; and
a receiving submodule (822) configured to receive the target plug-in returned by the server according to the plug-in downloading request sent by the sending submodule.

11. The device control apparatus of claim 8, further comprising:
an installation learning module (88) configured to acquire, when learning that an update version of the target plug-in is present on the server, the update version of the target plug-in from the server, and install the update version of the target plug-in.

12. The device control apparatus of claim 11, wherein the installation learning module comprises:
a notification receiving submodule (881) configured to receive a notification pushed by the server, the notification indicating that the update version of the target plug-in is present on the server.

13. The device control apparatus of claim 11, wherein the installation learning module comprises:
a sending submodule (882) configured to send a plug-in version search request to the server, the plug-in version search request carrying an identifier of the current device; and
a receiving comparing submodule (883) configured to receive a latest version number corresponding to the current device returned by the server according to the plug-in version search request, and learn that the update version of the target plug-in is present on the server if the latest version number is greater than a current version number corresponding to the current to-be-controlled device.

14. The device control apparatus of claim 11, wherein both the target plug-in of the current device and the update version of the target plug-in are saved in a current mobile terminal; and
the update version of the target plug-in comprises the identifier of and the version number corresponding to the current device, or the update version of the target plug-in comprises identifiers of and version numbers corresponding to the current device and other devices to be controlled.

15. A computer program, which when executing on a processor of a terminal device, performs a method according to any one of claims 1 to 7.
